# EUROPEAN PATENT APPLICATION

(11) **EP 4 546 148 A1**
(43) Date of publication of application: **30.04.2025**
(21) Application number: 23826144.0
(22) Date of filing: 06.06.2023
(51) Int. Cl.: G06F 13/40

(54) **IN-VEHICLE INFOTAINMENT SYSTEM AND DATA PROCESSING METHOD THEREFOR, AND STORAGE MEDIUM**

(30) Priority: 24.06.2022 CN 202210722861
(71) Applicant: Nio Technology (Anhui) Co., Ltd, Hefei City, Anhui 230601 (CN)
(72) Inventor: WANG, Deqiang, Hefei, Anhui 230601 (CN)
(74) Representative: Vossius & Partner Patentanwälte Rechtsanwälte mbB
(86) International application number: PCT/CN2023/098445
(87) International publication number: WO 2023/246495

(57) **Abstract**

A vehicle infotainment system (10) and a data processing method therefor, and a storage medium are provided. The vehicle infotainment system (10) includes an intelligent cockpit subsystem (110) and an auxiliary forwarding subsystem (120). The intelligent cockpit subsystem (110) includes: a processor (111) configured to be able to generate a DP signal and process a USB data signal; a relay (114, 115) configured to forward the USB data signal to the auxiliary forwarding subsystem (120); and a serializer configured to serialize the DP signal and send the serialized DP signal to the auxiliary forwarding subsystem (120). The auxiliary forwarding subsystem (120) includes: a deserializer configured to receive the serialized DP signal and deserialize the serialized DP signal into the DP signal; a drive module (123, 124) configured to be able to receive the USB data signal from the relay (114, 115) and the DP signal from the deserializer, and package the DP signal and/or the USB data signal into a data packet that meets a preset specification; and an interface module relay (125, 126) conforming to the preset specification and configured to send the data packet.

## Description

### Cross Reference to Related Application

The disclosure claims priority to Chinese Patent Application No. 202210722861.5, filed with the China National Intellectual Property Administration on June 24, 2022, and entitled "VEHICLE INFOTAINMENT SYSTEM AND DATA PROCESSING METHOD THEREFOR, AND STORAGE MEDIUM", which is incorporated herein by reference in its entirety.

### Technical Field

The disclosure relates to the field of vehicle entertainment devices, and specifically to a vehicle infotainment system and a data processing method therefor, and a storage medium.

### Background Art

With the rapid development of intelligent electric vehicles, an intelligent cockpit is increasingly becoming a second living space for a vehicle user in pursuit of vehicle entertainment experience, especially entertainment experience related to games and socializing. Virtual reality (VR)/augmented reality (AR) is a relatively new technology that can provide highly engaging immersive entertainment experiences. However, general VR/AR devices typically offer only audio, sound, and limited haptic experience. Due to cost constraints, VR/AR is only integrated with basic stereophonic audio output. Nevertheless, an intelligent cockpit of a vehicle has rich multimedia output capabilities, with some vehicles even offering up to twenty or more speakers. In addition, the integration of games with a vehicle's air-conditioning, fragrance system, and chassis could offer a gamer user multi-dimensional sensory experiences, such as temperature, scent, and motions, providing a more realistically simulated game experience and a deeper sense of immersion.

In view of this, there is a need for an improved VR/AR implementation method.

### Summary

Embodiments of the disclosure provide a vehicle infotainment system and a data processing method therefor, and a storage medium, in order to provide hardware support for augmented reality/virtual reality devices through the vehicle infotainment system.

According to an aspect of the disclosure, a vehicle infotainment system is provided. The vehicle infotainment system includes an intelligent cockpit subsystem and an auxiliary forwarding subsystem. The intelligent cockpit subsystem includes: a processor configured to be able to generate a DP signal and process a USB data signal; a relay configured to forward the USB data signal to the auxiliary forwarding subsystem; and a serializer configured to serialize the DP signal and send the serialized DP signal to the auxiliary forwarding subsystem. The auxiliary forwarding subsystem includes: a deserializer configured to receive the serialized DP signal and deserialize the serialized DP signal into the DP signal; a drive module configured to be able to receive the USB data signal from the relay and the DP signal from the deserializer, and package the DP signal and/or the USB data signal into a data packet that meets a preset specification; and an interface module conforming to the preset specification and configured to send the data packet.

In some embodiments of the disclosure, the preset specification is a USB Type-C specification.

In some embodiments of the disclosure, the drive module packages the DP signal and the USB data signal into the data packet in a first mode, the USB data signal conforming to a USB 2.0 standard.

In some embodiments of the disclosure, the drive module packages the USB data signal into the data packet in a second mode, the USB data signal conforming to a USB 3.0 standard.

In some embodiments of the disclosure, the auxiliary forwarding subsystem further includes a power supply unit, and the power supply unit supplies power to the auxiliary forwarding subsystem and to a device connected to the interface module.

In some embodiments of the disclosure, the device is a virtual reality device and/or an augmented reality device.

In some embodiments of the disclosure, the USB data signal includes at least one of the following: a sensor signal from the virtual reality device and/or the augmented reality device, and a control signal for a vehicle device, and the drive module is able to forward the USB data signal to the processor via the relay.

In some embodiments of the disclosure, the vehicle device includes at least one of the following: an audio system, a camera, a display, an air-conditioning system, a lighting system, a fragrance system, a seat system, and a chassis system.

According to another aspect of the disclosure, a data processing method for a vehicle infotainment system is provided, where the vehicle infotainment system includes an intelligent cockpit subsystem and an auxiliary forwarding subsystem. The method includes: serializing a DP signal from the intelligent cockpit subsystem and sending the serialized DP signal to the auxiliary forwarding subsystem; relaying a USB data signal from the intelligent cockpit subsystem to the auxiliary forwarding subsystem; receiving, by the auxiliary forwarding subsystem, the serialized DP signal, deserializing the serialized DP signal into the DP signal, and receiving the USB data signal; and packaging the DP signal and/or the USB data signal into a data packet that meets a preset specification, and sending the data packet through an interface that meets the preset specification.

In some embodiments of the disclosure, the preset specification is a USB Type-C specification.

In some embodiments of the disclosure, the auxiliary forwarding subsystem packages the DP signal and the USB data signal into the data packet in a first mode, the USB data signal conforming to a USB 2.0 standard.

In some embodiments of the disclosure, the auxiliary forwarding subsystem packages the USB data signal into the data packet in a second mode, the USB data signal conforming to a USB 3.0 standard.

In some embodiments of the disclosure, the method further includes: supplying, by the auxiliary forwarding subsystem, power to a device that receives the data packet.

According to another aspect of the disclosure, there is provided a computer-readable storage medium having instructions stored therein, where the instructions, when executed by a processor, cause the processor to perform any one of the data processing methods as described above.

According to another aspect of the disclosure, a vehicle is provided. The vehicle includes any one of the vehicle infotainment systems as described above.

Some embodiments of the disclosure provide a vehicle infotainment system, which can be configured to be connected to a virtual reality device and an augmented reality device. The vehicle infotainment system can provide the virtual reality device and the augmented reality device with audio and video data, and function with vehicle's hardware capacities to improve user experience while using the virtual reality device and the augmented reality device.

### Brief Description of the Drawings

The above and other objectives and advantages of the disclosure will be more thorough and clearer from the following detailed description in conjunction with the drawings, where the same or similar elements are represented by the same reference numerals.
FIG. 1 shows a vehicle infotainment system according to an embodiment of the disclosure; and
FIG. 2 shows a data processing method performed by the vehicle infotainment system according to an embodiment of the disclosure.

### Detailed Description of Embodiments

For brevity and illustrative purposes, various embodiments will now be described in detail with reference to the drawings, which are provided as illustrative examples of the disclosure. However, a person skilled in the art would easily realize that various embodiments disclosed herein may be equivalently applied or directed to any vehicle infotainment systems and data processing methods therefor, and storage media, and it is evident that various modifications and changes may be made thereto without departing from the broad spirit and scope of the disclosure.

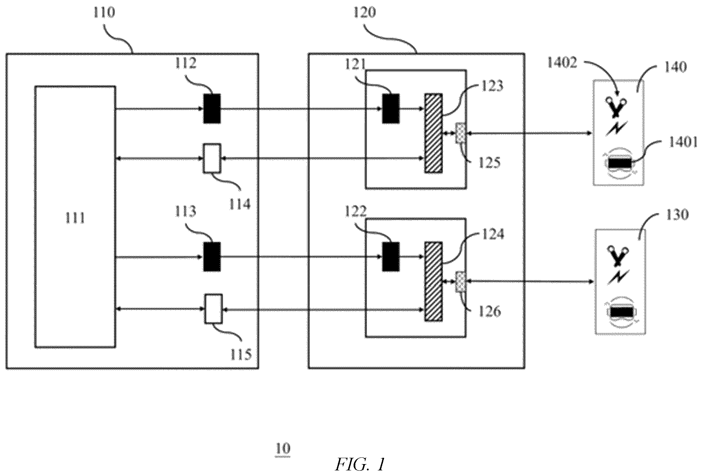

According to an aspect of the disclosure, a vehicle infotainment system is provided. FIG. 1 shows a vehicle infotainment system 10 according to some examples of the disclosure. For better understanding, FIG. 1 also shows other apparatuses (for example, a virtual reality device and an augmented reality device) that can be communicatively coupled with the vehicle infotainment system 10. Similar to existing vehicle infotainment systems, the vehicle infotainment system 10 shown in FIG. 1 can provide interfaces for external devices (for example, mobile terminals) to achieve functional complementarity. For example, the mobile terminal may be communicatively coupled to the vehicle infotainment system 10, so that the functions of the mobile terminal can be controlled via the vehicle infotainment system 10. The mobile terminal may be a smart phone. In some scenarios, the vehicle infotainment system 10 can control and use the mobile terminal to make a call and play music, and the vehicle infotainment system 10 may serve as an audio output device of the mobile terminal. The mobile terminal may alternatively be a portable device in another form, for example, a smart PDA, a notebook computer, or a tablet computer.

In contrast to a conventional vehicle infotainment system, the vehicle infotainment system 10 in FIG. 1 can further provide interfaces for an external augmented reality device and an external virtual reality device, so that the external augmented reality device and the external virtual reality device may utilize software and hardware already deployed in the vehicle infotainment system 10 to enhance the functionality of the external augmented reality device and the external virtual reality device, respectively, or to improve the user experience. A virtual reality device will be used as an example below to describe operations of the vehicle infotainment system 10. However, a person skilled in the art may appreciate that content described below is also applicable to an augmented reality device.

As shown in FIG. 1, the vehicle infotainment system 10 includes an intelligent cockpit subsystem 110 and an auxiliary forwarding subsystem 120. FIG. 1 shows two data links. The intelligent cockpit subsystem includes a processor 111, serializers/deserializers 112 and 113, and relays 114 and 115. The auxiliary forwarding subsystem 120 includes serializers/deserializers 121 and 122, drive modules 123 and 124, and interface modules 125 and 126. The processor 111, the serializer/deserializer 112, the relay 114, the serializer/deserializer 121, the drive module 123, and the interface module 125 form an information channel, so that the vehicle infotainment system 10 is connected to a virtual reality device 140. The processor 111, the serializer/deserializer 113, the relay 115, the serializer/deserializer 122, the drive module 124, and the interface module 126 form another information channel, so that the vehicle infotainment system 10 is connected to a virtual reality device 130. Certainly, the virtual reality devices 130 and 140 shown in the figure may alternatively be replaced with augmented reality devices. A virtual reality device is used as an example below to describe the operations of the disclosure. It should be understood that although the two channels are shown in the figure, the vehicle infotainment system 10 may alternatively establish more channels through the intelligent cockpit subsystem 110 and the auxiliary forwarding subsystem 120.

Due to limitation of computing power of the main chip, virtual reality devices currently available on the market have issues such as low resolution, low display frame rate, constraints on performance and power consumption, leading to a suboptimal user experience. In some examples of the disclosure, the vehicle infotainment system 10 is connected to the virtual reality devices 140 and 130 via the interface modules 125 and 126 respectively, so that the vehicle infotainment system 10 provides an improved display effect. For example, the virtual reality device 140 includes a pair of wearable goggles 1401 and two controllers 1402 connected to the goggles 1401 in a wireless manner (for example, a Bluetooth manner). A user can interact with an image presented in the goggles 1401 through the controllers 1402, to perform operations such as select, OK, enter, and quit. An intelligent SoC chip (for example, a virtual reality device) or a device (for example, an augmented reality device) without an intelligent SoC device may be integrated into an external device. A presented image may be partially or completely rendered by the intelligent cockpit subsystem 110.

The processor 111 of the intelligent cockpit subsystem 110 can generate a DisplayPort (DP) signal and process a universal serial bus (USB) data signal. The vehicle infotainment system 10 can output a high-quality video signal through a built-in high-speed processing chip. The output video signal is sent to the virtual reality devices 130 and 140. In addition, the processor 111 of the vehicle infotainment system 10 can also process data transmitted between the vehicle infotainment system 10 and the virtual reality devices 130 and 140. For example, the processor 111 can process a data signal including a control command sent from the virtual reality devices 130 and 140 to parse the control command from the data signal and deliver the content of the control command to a corresponding device within the vehicle for execution

The relays 114 and 115 of the intelligent cockpit subsystem 110 can forward the USB data signal to the auxiliary forwarding subsystem. The relays 114 and 115 can increase a transmission distance of the USB data signal, thereby ensuring that the USB transmission path functions properly. There may be two types of USB connection between the intelligent cockpit subsystem 110 and the auxiliary forwarding subsystem 120, namely USB 3.0 and USB 2.0. There are two pairs of USB 3.0 data wires, amounting to four wires in total, where each pair of wires is responsible for a differential signal in one direction. There is a pair of USB 2.0 data wires, amounting to two wires in total, where each wire is responsible for data in one direction. Therefore, six data wires may be needed in total. Due to the high USB data transmission rate, to achieve farther transmission within the vehicle, relay(s) may be arranged within the intelligent cockpit subsystem 110.

The serializers/deserializers 112 and 113 of the intelligent cockpit subsystem 110 can serialize the DP signal and send the serialized DP signal to the auxiliary forwarding subsystem. The DP signal is a high-speed signal. A conventional vehicle infotainment system cannot directly process the signal due to the lack of a connection device that meets vehicle specification requirements. Therefore, the serializers/deserializers 112 and 113 may perform serializing and deserializing operations on the DP signal, so that the DP signal can be transmitted between the intelligent cockpit subsystem 110 and the auxiliary forwarding subsystem 120. Then, the serializers/deserializers 121 and 122 of the auxiliary forwarding subsystem 120 may receive the serialized DP signal and deserialize the serialized DP signal into the DP signal.

The drive modules 123 and 124 of the auxiliary forwarding subsystem 120 can receive the USB data signal from the relays 114 and 115 and the DP signal from the deserializers, and package the DP signal and/or the USB data signal into a data packet that meets a preset specification. Then, the vehicle infotainment system 10 may package the DP signal and the USB data signal for sending. By incorporating the auxiliary forwarding subsystem 120 into the vehicle infotainment system 10, a vehicle infotainment system that is constructed according to conventional vehicle specifications can achieve data transmission that includes data receiving and sending with various consumer electronic devices (especially virtual reality and augmented reality devices).

The interface modules 125 and 126 of the auxiliary forwarding subsystem 120 meets the preset specification and are configured to send the data packet packaged by the drive modules 123 and 124. In some embodiments of the disclosure, the preset specification is a USB Type-C specification. USB Type-C, as a USB interface outline standard, has a smaller size than Type-A and Type-B, and is a type of interface that can be applied to both primary devices and secondary devices. Generally, a Type-C interface may include four pairs of TX/RX differential pins, two pairs of USB D+/D- pins, one pair of SBU pins, and two CC pins, and also four VBUS pins and four GND pins. If a receiving end needs only a DP signal rather than a USB 3.1 signal, DP output may be implemented through the four pairs of TX/RX differential pins. Therefore, DP output of at most four lanes is implemented, a total output bandwidth up to 32.4 Gbps is provided (8.1 Gbps of data may be output through each lane), a 5K × 3K and 60 fps video is easily obtained, and even a highest 8K × 4K and 60 fps video (4:2:0 data) is obtained. This mode is a DP only mode. It should be understood that when necessary, the four pairs of TX/RX differential pins may be further used for output to construct a channel based on an audio and video transmission protocol such as HDMI.

In some embodiments of the disclosure, the drive modules 123 and 124 simultaneously support the DP signal and the USB 2.0 signal and package the DP signal and the USB data signal into the data packet in a first mode (a "DP Alt" mode), where the USB data signal meets a USB 2.0 standard. In addition, in some other embodiments of the disclosure, the drive modules 123 and 124 can support high-speed data and package the USB data signal into the data packet in a second mode (a "USB data" mode), where the USB data signal meets a USB 3.0 standard. In some examples, the specific modes, as described above, in which the drive modules 123 and 124 function may be configured via a center console screen of the intelligent cockpit subsystem 110.

In the first mode, the vehicle infotainment system 10 can support transmission of the USB 2.0 data and the DP signal. Applicable scenarios may include using virtual reality devices 130 and 140 for playing films, loading games, and/or projecting screen for entertainment in this mode, the DP signal and the USB 2.0 data signal may be transmitted between the vehicle infotainment system 10 (specifically, the intelligent cockpit subsystem 110) and the external device. The intelligent cockpit subsystem 110 may render and generate film content or game content, and transmit the film content or the game content to the virtual reality devices 130 and 140 through a DP path for content displaying. In addition, the virtual reality devices 130 and 140 may also transmit sensor data back to the intelligent cockpit subsystem 110 through a USB 2.0 path for processing.

For example, the vehicle infotainment system 10 may receive spatial positioning information from the virtual reality devices 140 and 130 through the interface modules 125 and 126, respectively. The spatial positioning information may include a change of a field of view of an image caused by a change of a field of view of the goggles 1401 worn by a user, and may further include a position change caused by movement of the controllers. When the field of view changes, the image presented by the goggles 1401 should accordingly change. The processor 111 may generate image data and/or audio data based on the spatial positioning information received from the virtual reality devices 140 and 130. Specifically, the processor 111 may generate corresponding image data and audio data based on spatial positioning information received through the interface module 125. The generated image data and audio data may be used to update displayed content and outputted content of the virtual reality device 140.

After generation of image data and audio data that are updated based on a change of a field of view, the vehicle infotainment system 10 may provide the image data and the audio data to the virtual reality devices 140 and 130 through the interface modules 125 and 126. Then, the virtual reality devices 140 and 130 may provide a user with a virtual reality scene by displaying the image data and outputting the audio data.

In the second mode, USB 3.0 high-speed data exchange may be implemented between the vehicle infotainment system 10 and the external device. Applicable scenarios may include reading and writing of a USB flash disk and the like. In addition, only the USB data signal may be exchanged between the vehicle infotainment system 10 (specifically, the intelligent cockpit subsystem 110) and the external device. The DP path between the intelligent cockpit subsystem 110 and the external device is not used. At this time, the data transmission rate is high and may reach 5 Gbps or 10 Gbps. In some embodiments of the disclosure, the device is a virtual reality device and/or an augmented reality device, and the USB data signal includes at least one of the following: a sensor signal from the virtual reality device and/or the augmented reality device and a control signal for an in-vehicle device. The drive modules 123 and 124 may forward the USB data signal to the processor 111 through the relays 114 and 115. In some embodiments, the vehicle device may be an audio system, a camera, a display, an air-conditioning system, a lighting system, a fragrance system, a seat system, a chassis system, and the like. For the examples of FIG. 1, the external devices are the virtual reality devices 130 and 140, and the virtual reality devices 130 and 140 may control air-conditioning temperature, fragrance release, chassis movements, or the like at the vehicle infotainment system through the path, so that immersive gaming experience can be realized.

In some embodiments of the disclosure, the vehicle infotainment system 10 may send control guidance for an in-vehicle device. For example, the image data sent through the interface module 125 includes the control guidance for the in-vehicle device. For another example, the image data generated by the vehicle infotainment system 10 may be projected as an image with a specific aspect ratio. The image may contain a list menu or other content in a similar format for the user to select. The list menu may include control options to control the in-vehicle device and these control options may also function as guidance with which the user may interact in the virtual reality environment. For example, once a specific control option is activated, the control option may be displayed in an invert color or another color different from a background color, to prompt the user that the control option has been activated. In addition, the activation of the control option may be further accompanied by associated auditory and tactile feedback. The auditory and tactile feedback may be delivered via speaker(s) and controller(s). The in-vehicle device that can be controlled through the virtual reality device may be an audio system, a camera, a display, an air-conditioning system, a lighting system, a fragrance system, a seat system, and the like.

In some other examples, the control guidance may be pushed to the augmented reality device or the virtual reality device without causing interferences to the user. There is no need to upload and project the control guidance each time when the user wishes to control the in-vehicle device by following the control guidance. For example, the vehicle infotainment system 10 may send a game instruction manual through the interface module 125. The game instruction manual may include the control guidance for controlling the in-vehicle device. For example, the content of the control guidance may be that when the user interacts through the controller to make a particular movement, the in-vehicle device may be caused to function. In some instances, when the user uses a controller to draw a mark resembling a music note " 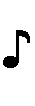 ", the audio system may be triggered to play music. In some other instances where game interactive scenes are involved, if a user utters voice commands such as "let the storm rage on", the air-conditioning system may blow an air flow colder than the environment temperature to the position where the user is located. Similarly, in some other instances, the in-vehicle device may be automatically triggered based on game scenes loaded by the augmented reality device or the virtual reality device.

In some embodiments of the disclosure, the auxiliary forwarding subsystem 120 further includes a power supply unit (not shown in the figure), and the power supply unit supplies power to the auxiliary forwarding subsystem 120 (specifically, the serializers/deserializers 121 and 122 and the drive modules 123 and 124). The power supply unit may also supply power to devices connected to the interface modules 125 and 126.

According to another aspect of the disclosure, a vehicle is provided. The vehicle includes any one of the vehicle infotainment systems as described above.

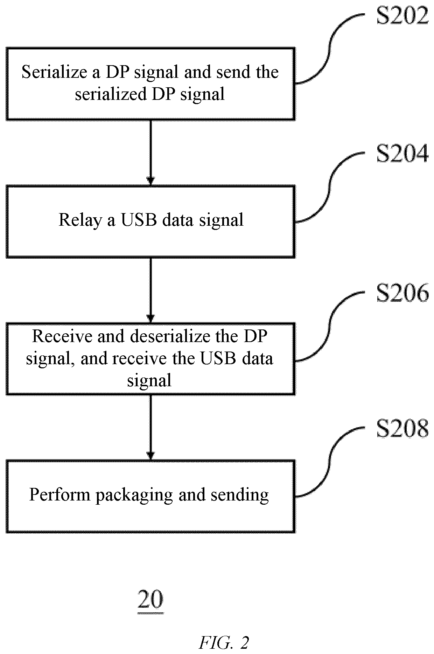

According to another aspect of the disclosure, a data processing method for a vehicle infotainment system is provided, where the vehicle infotainment system may include the intelligent cockpit subsystem 110 and the auxiliary forwarding subsystem 120 shown in FIG. 1. As shown in FIG. 2, the data processing method 20 (hereinafter briefly referred to as the method 20) includes the following steps: step S202: serializing a DP signal from the intelligent cockpit subsystem and sending the serialized DP signal to the auxiliary forwarding subsystem; step S204: relaying a USB data signal from the intelligent cockpit subsystem to the auxiliary forwarding subsystem; step S206: receiving, by the auxiliary forwarding subsystem, the serialized DP signal, deserializing the serialized DP signal into the DP signal, and receiving the USB data signal; and step S208: packaging the DP signal and/or the USB data signal into a data packet that meets a preset specification, and sending the data packet through an interface that meets the preset specification.

The method 20 includes step S202 of serializing a DP signal from the intelligent cockpit subsystem and sending the serialized DP signal to the auxiliary forwarding subsystem. The DP signal is a high-speed signal. A conventional vehicle infotainment system cannot directly process the signal due to the lack of a connection device that meets vehicle specification requirements. Therefore, the serializers/deserializers may perform serializing and deserializing operations on the DP signal, so that the DP signal can be transmitted between the intelligent cockpit subsystem and the auxiliary forwarding subsystem.

The method 20 includes step S204 of relaying a USB data signal from the intelligent cockpit subsystem to the auxiliary forwarding subsystem. Due to the high USB data transmission rate, to achieve farther transmission within the vehicle, relay(s) may be arranged within the intelligent cockpit subsystem.

The method 20 includes step S206 of receiving, by the auxiliary forwarding subsystem, the serialized DP signal, deserializing the serialized DP signal into the DP signal, and receiving the USB data signal.

The method 20 includes step S208 of packaging the DP signal and/or the USB data signal into a data packet that meets a preset specification, and sending the data packet through an interface that meets the preset specification. Then, the vehicle infotainment system may package the DP signal and the USB data signal for sending. By incorporating the auxiliary forwarding subsystem into the vehicle infotainment system, a vehicle infotainment system that is constructed according to conventional vehicle specifications can achieve data transmission that includes data receiving and sending with various consumer electronic devices (especially virtual reality and augmented reality devices). In some embodiments of the disclosure, the preset specification is a USB Type-C specification.

In some embodiments of the disclosure, in step S208, the auxiliary forwarding subsystem packages the DP signal and the USB data signal into the data packet in a first mode, where the USB data signal meets a USB 2.0 standard. In other examples, in step S208, the auxiliary forwarding subsystem packages the USB data signal into the data packet in a second mode, where the USB data signal meets a USB 3.0 standard.

In some embodiments of the disclosure, the method 20 further includes the step (not shown in the figure): supplying power, by the auxiliary forwarding subsystem, to a device configured to receive the data packet.

It should be noted that various steps of the method 20 may be implemented according to the operations of the corresponding functional modules of the vehicle infotainment system 10 as described above. The descriptions of the corresponding functional modules have been provided above, and due to space limitations, such descriptions will not be reiterated.

According to another aspect of the disclosure, there is provided a computer-readable storage medium having instructions stored therein, where the instructions, when executed by a processor, cause the processor to perform any one of the data processing methods as described above. The computer-readable medium in the disclosure includes various types of computer storage media, and may be any usable medium accessible to a general-purpose or special-purpose computer. For example, the computer-readable medium may include a RAM, a ROM, an EPROM, an EEPROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically through lasers in a disc. A combination thereof shall also fall within the scope of protection of the computer-readable media. An exemplary storage medium is coupled to a processor, so that the processor can read information from and write information to the storage medium. In another instance, the storage medium may be integrated into the processor. The processor and the storage medium may reside in an ASIC. The ASIC may reside in a user terminal. In an alternative solution, the processor and the storage medium may reside as discrete assemblies in a user terminal.

The foregoing descriptions are merely the implementations of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the implementations of the disclosure and features in the implementations may also be combined with each other. The scope of protection of the disclosure shall be subject to recitations of the claims.

## Claims

1. A vehicle infotainment system, **characterized by** comprising an intelligent cockpit subsystem and an auxiliary forwarding subsystem, wherein
the intelligent cockpit subsystem comprises:
a processor configured to be able to generate a DP signal and process a USB data signal;
a relay configured to forward the USB data signal to the auxiliary forwarding subsystem; and
a serializer configured to serialize the DP signal and send the serialized DP signal to the auxiliary forwarding subsystem; and
the auxiliary forwarding subsystem comprises:
a deserializer configured to receive the serialized DP signal and deserialize the serialized DP signal into the DP signal;
a drive module configured to be able to receive the USB data signal from the relay and the DP signal from the deserializer, and package the DP signal and/or the USB data signal into a data packet that meets a preset specification; and
an interface module conforming to the preset specification and configured to send the data packet.

2. The vehicle infotainment system according to claim 1, **characterized in that** the preset specification is a USB Type-C specification.

3. The vehicle infotainment system according to claim 2, **characterized in that** the drive module packages the DP signal and the USB data signal into the data packet in a first mode, the USB data signal conforming to a USB 2.0 standard.

4. The vehicle infotainment system according to claim 2, **characterized in that** the drive module packages the USB data signal into the data packet in a second mode, the USB data signal conforming to a USB 3.0 standard.

5. The vehicle infotainment system according to claim 1, **characterized in that** the auxiliary forwarding subsystem further comprises a power supply unit, and the power supply unit supplies power to the auxiliary forwarding subsystem and to a device connected to the interface module.

6. The vehicle infotainment system according to claim 5, **characterized in that** the device is a virtual reality device and/or an augmented reality device.

7. The vehicle infotainment system according to claim 6, **characterized in that** the USB data signal comprises at least one of the following: a sensor signal from the virtual reality device and/or the augmented reality device, and a control signal for a vehicle device, and the drive module is able to forward the USB data signal to the processor via the relay.

8. The vehicle infotainment system according to claim 7, **characterized in that** the vehicle device comprises at least one of the following: an audio system, a camera, a display, an air-conditioning system, a lighting system, a fragrance system, a seat system, and a chassis system.

9. A data processing method for a vehicle infotainment system, **characterized in that** the vehicle infotainment system comprises an intelligent cockpit subsystem and an auxiliary forwarding subsystem, the method comprising:
serializing a DP signal from the intelligent cockpit subsystem and sending the serialized DP signal to the auxiliary forwarding subsystem;
relaying a USB data signal from the intelligent cockpit subsystem to the auxiliary forwarding subsystem;
receiving, by the auxiliary forwarding subsystem, the serialized DP signal, deserializing the serialized DP signal into the DP signal, and receiving the USB data signal; and
packaging the DP signal and/or the USB data signal into a data packet that meets a preset specification, and sending the data packet through an interface that meets the preset specification.

10. The method according to claim 9, **characterized in that** the preset specification is a USB Type-C specification.

11. The method according to claim 10, **characterized in that** the auxiliary forwarding subsystem packages the DP signal and the USB data signal into the data packet in a first mode, the USB data signal conforming to a USB 2.0 standard.

12. The method according to claim 10, **characterized in that** the auxiliary forwarding subsystem packages the USB data signal into the data packet in a second mode, the USB data signal conforming to a USB 3.0 standard.

13. A computer-readable storage medium having stored therein instructions, **characterized in that** the instructions, when executed by a processor, cause the processor to perform the method according to any one of claims 9 to 12.

14. A vehicle, **characterized by** comprising the vehicle infotainment system according to any one of claims 1 to 8.
